# EUROPÄISCHE PATENTSCHRIFT

(11) **EP 1 286 101 B1**
(45) Veröffentlichungstag und Bekanntmachung des Hinweises auf die Patenterteilung: **02.11.2005**
(21) Anmeldenummer: 02016954.6
(22) Anmeldetag: 01.08.2002
(51) Int. Cl.: F16L 55/28, F16L 55/32, F16L 55/40

(54) **Eikanalfahrwagen**
Pipeline pig for an oval channel
Racleur de pipeline pour un canal ovoidal

(30) Priorität: 07.08.2001 DE 10138672
(43) Veröffentlichungstag der Anmeldung: 26.02.2003
(73) Patentinhaber: Förster, Dirk, 04425 Taucha (DE)
(72) Erfinder: Förster, Dirk, 04425 Taucha (DE)
(74) Vertreter: Weber, Joachim

(56) Entgegenhaltungen:
- EP-A- 0 886 100
- DE-A- 4 444 113
- DE-A- 19 527 316
- DE-A- 19 626 105

## Beschreibung

Die Erfindung bezieht sich auf einen Eikanalfahrwagen für Kanalsanierungsroboter mit einer Antriebseinheit und zumindest einem angetriebenen Rad.

Rohrroboter sind in unterschiedlichsten Ausgestaltungsformen bekannt. Sie werden insbesondere bei runden Querschnitten kleineren Durchmessers eingesetzt. Hierzu weist die Antriebseinheit mehrere angetriebene Räder auf, sodass der Roboter ferngesteuert durch ein Rohr oder einen Kanal fahren kann.

Bei Eikanälen ist die zur Verfügung stehende Aufstandsfläche im Vergleich zur erforderlichen Höhe des Kanalfahrwagens relativ gering. Aus diesem Grunde können übliche Kanalfahrwagen für Eiprofile, insbesondere größere Eiprofile nicht eingesetzt werden.

Aus der DE 44 44 113 A1, die den nächstkommenden Stand der Technik bildet, ist eine höhenverstellbare, in einem Kanal verfahbare Lafette bekannt. Die Iragkonstruktion der Lafette ist mit wenigstens zwei Schenenhubgetrieben zur Höhenverstellung versehen.

Aus der DE 196 26 105 A1 ist ein Fahrschemel für Kanalsanierungsroboter bekannt. Um eine Anpassung an unterschiedliche Größen von Kanalrohren zu ermöglichen, ist das Fahrgestell teleskopartig höhenverstellbar, wobei der Antrieb jeweils über eine Antriebskette erfolgt.

Ein Fahrzeug zum Befahren von unterirdisch verlegten Rohren zeigt die DE 195 27 316 C2. Das Fahrzeug ist mit einem Funktionsmodul ausgerüstet, an welchem in Fahrtrichtung hintereinander angeordnete Laufräder gelagert sind. Zur Höhenanpassung des Fahrzeugs sind die Laufräder an Schwingen gelagert.

Der Erfindung liegt die Aufgabe zu Grunde, einen Eikanalfahrwagen der eingangs genannten Art zu schaffen, welcher bei einfacher, kostengünstiger Herstellbarkeit universell einsetzbar ist und einfach an unterschiedlichste Querschnittsgrößen von Eiprofilen angepasst werden kann.

Erfindungsgemäß wird die Aufgabe durch die Merkmale des Hauptanspruchs gelöst, die Unteransprüche zeigen weitere vorteilhafte Ausgestaltungen der Erfindung.

Bei dem erfindungsgemäßen Eikanalfahrwagen ist es somit vorgesehen, dass zumindest eine Stützstrebe aus einzelnen Modulen aufgebaut ist. Diese sind somit baukastenartig miteinander verbunden, sodass sich beliebige Höhen der Stützstreben und damit des Eikanalfahrwagens in einfachster Weise realisieren lassen. Da in den Modulen Antriebskraftübertragungseinrichtungen aufgenommen sind, benötigt der Eikanalfahrwagen keine Kettenantriebe oder Ähnliches, welche störungsanfällig sind und einen problemlosen Umbau nicht ermöglichen.

In besonders vorteilhafter Weise ist vorgesehen, dass zwei Stützstreben vorgesehen sind, welchen jeweils ein angetriebenes Radpaar zugeordnet ist.

In einer besonders vorteilhaften Ausgestaltung ist vorgesehen, dass jedes Modul zumindest ein Zahnrad umfasst, welches in seinem inneren aufgenommen ist und so in seiner Dimensionierung ausgestaltet ist, dass es bei Zusammensetzen mit einem benachbarten Modul mit dessen Zahnrad in Eingriff bringbar ist. Die miteinander verbundenen Module bilden somit einen Antriebsstrang, welcher im Wesentlichen spielfrei arbeitet und auch hohe Kräfte übertragen kann.

Besonders günstig ist es, wenn die Antriebseinheit beidseitig jeweils zumindest eine Stützeinheit aufweist. Die Stützeinheit bewirkt eine sichere Führung des Eikanalwagens in dem Eikanal und verhindert ein Kippen des selben. Die Stützeinheit kann Rollen oder Gleitschienen umfassen, sie ist bevorzugter Weise schwenkbar und/oder federnd gelagert, um sich gegen die Wandung des Eiprofils abzustützen und Maßungenauigkeiten des Eiprofils auszugleichen.

Besonders vorteilhaft ist es, wenn die Antriebseinheit so ausgebildet und dimensioniert ist, dass in diese ein Rohrroboter einsetzbar ist. Derartige Rohrroboter sind zwar nicht standardisiert, jedoch am Markt in bestimmten Abmessungen und Ausgestaltungen verfügbar. Sie verfügen über die erforderlichen Einrichtungen zur Fernsteuerung, tragen einen Arbeitskopf und weisen Anschlüsse für Räder oder Radachsen auf. Es ist somit möglich, einen derartigen Rohrroboter an seinen Abtriebswellen mit Zahnrädern oder ähnlichem zu versehen und direkt in die Antriebseinheit einzusetzen.

Im Folgenden wird die Erfindung anhand von Ausführungsbeispielen in Verbindung mit der Zeichnung beschrieben. Dabei zeigt:
- Fig. 1: eine schematische Seitensansicht, teils im Schnitt, eines ersten Ausführungsbeispiels des erfindungsge- mäßen Eikanalfahrwagens,
- Fig. 2: eine stirnseitige Ansicht des in Fig. 1 gezeigten Eikanalfahrwagens,
- Fig. 3: eine Ansicht, ähnlich Fig. 2, bei Anpassung des Ei- kanalwagens an einen geänderten Querschnitt des Ei- profils, und
- Fig. 4: eine Draufsicht auf den erfindungsgemäßen Eikanal- wagen.

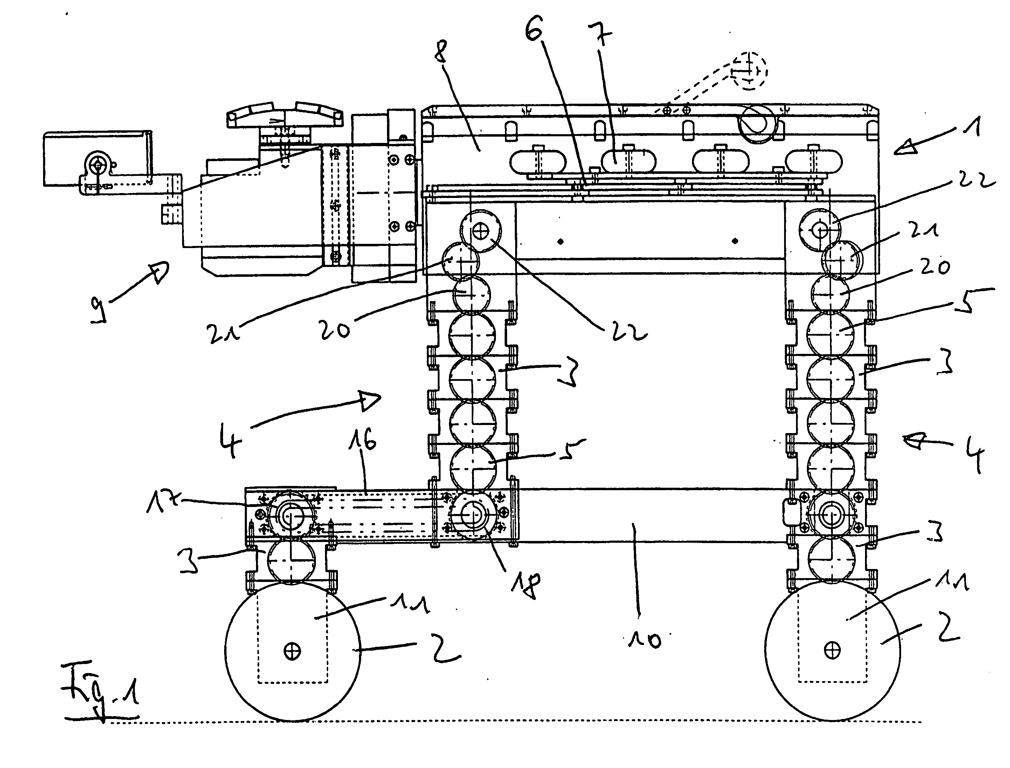

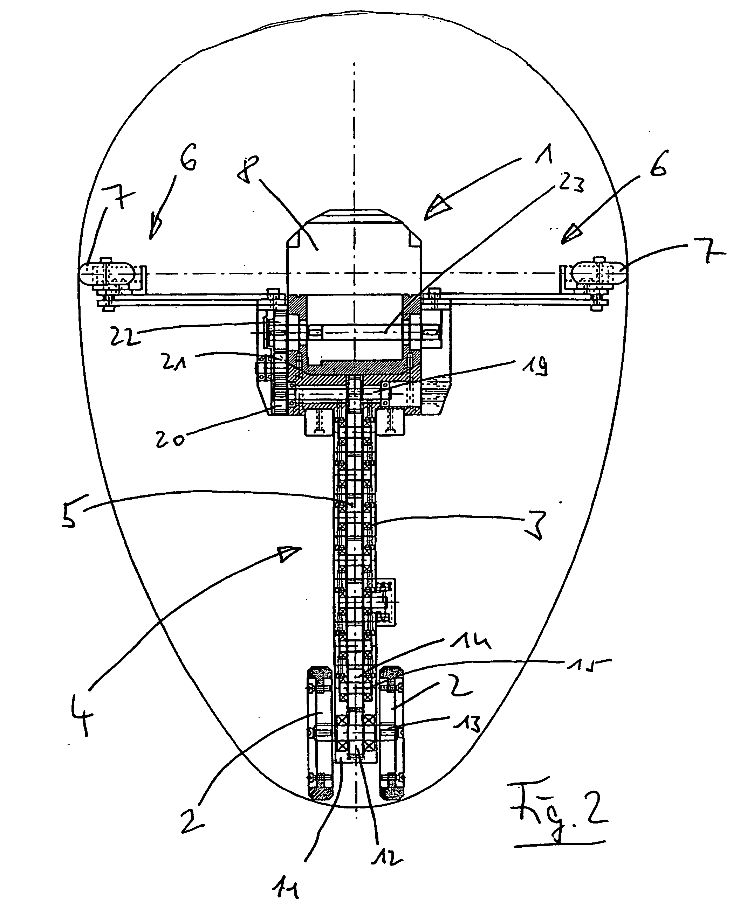

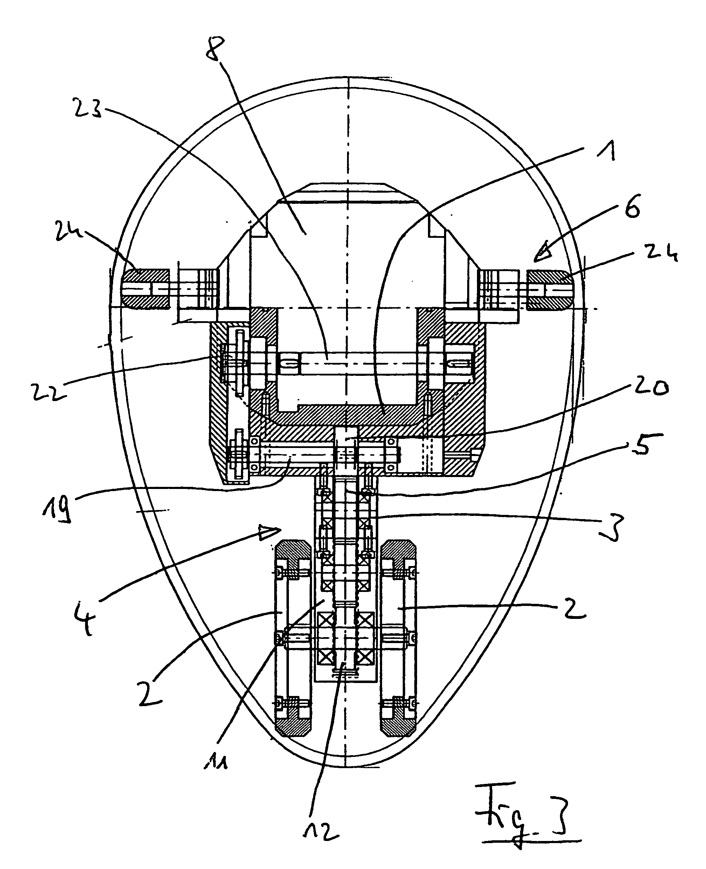

Die in Fig. 1 gezeigte Seitenansicht zeigt Räder 2, welche drehbar an einer Radaufnahme 11 (sh. Fig. 2 und 3) gelagert sind. Die Radaufnahme umfasst eine mit einem Zahnrad 12 versehende Radachse 13. Das Zahnrad 12 kämmt mit einem Hilfs-Zahnrad 14, welches an einer Hilfswelle 15 gelagert ist. Mit der Radaufnahme verbunden ist ein Modul 3, in welchem ein Zahnrad 5 drehbar gelagert ist. Dieses kämmt mit dem Hilfs-Zahnrad 14 sowie mit einem benachbarten Zahnrad 5 eines benachbarten Moduls 3 (sh. Fig. 2 und 3).

Das Vorderrad (sh. Fig. 1) ist über Modul 3 mit einem unteren Rahmen 10 verbunden, in dem eine Kette 16 läuft, die zwei Zahnräder 17 und 18 miteinander verbindet. Das Zahnrad 18 kämmt in der gezeigten Weise mit dem Zahnrad 5 des sich anschließenden Moduls.

Durch Änderung der Anzahl der Module ist es möglich, die Höhe der Stützstrebe 4 zu variieren, so wie dies sich aus dem Vergleich der Fig. 1, 2 und 3 ergibt.

In einer Antriebseinheit 1 ist eine Abtriebswelle 19 drehbar gelagert, die ein Zahnrad 20 aufweist, welches mit dem Zahnrad 5 des obersten Moduls kämmt. Über ein Zwischenrad 21 ist das Zahnrad 20 mit einem Antriebsrad 22 in Eingriff, welches auf einer Antriebswelle 23 sitzt.

Wie sich aus den Fig. 2 und 3 ergibt, ist die Antriebseinheit wannenartig aufgebaut und ermöglicht somit das Einsetzen eines Rohrroboters 8, welcher mit einem üblichen, aus dem Stand der Technik bekannten Arbeitskopf 9 versehen ist. Der Rohrroboter 8 verfügt über einen nicht dargestellten Antrieb, der mehrere Motoren umfassen kann. Der Antrieb weist Abtriebsmittel auf, die mit der Antriebswelle 23 in Eingriff bringbar sind.

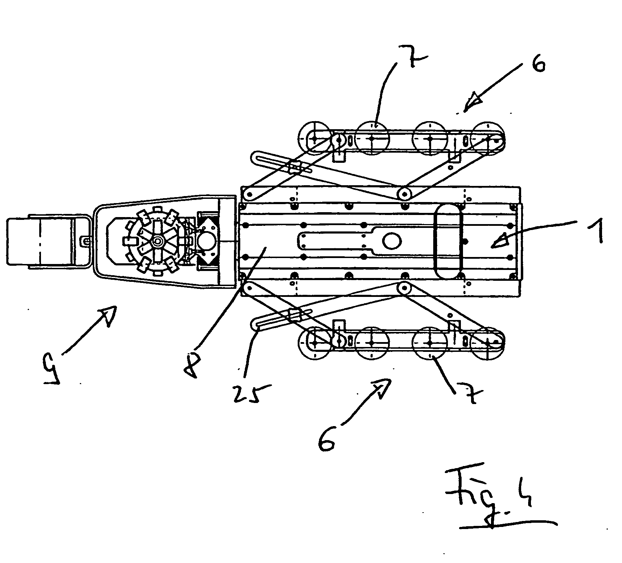

Wie die Fig. 2 bis 4 zeigen, sind an der Antriebseinheit 1 seitliche Stützeinheiten 6 vorgesehen, die beispielsweise Rollen 7 oder Gleitelemente 24 aufweisen können. Die Fig. 4 zeigt, dass die Stützeinheit 6 einen Vielgelenkmechanismus umfassen kann, der über eine Hilfsstrebe 25 einstellbar und verriegelbar ist. Die Rollen 7 bzw. die Gleitstücke 24 können zusätzlich (nicht dargestellt) federnd gelagert sein.

Erfindungsgemäß ist es weiterhin wichtig, dass die Drehachse der vorderen Räder 2 gegenüber der vorderen Stützstrebe 4 nach vorne verlagert ist (Antrieb mittels der Kette 16). Hierdurch gelangt die Drehachse des Rades 2 unter die Arbeitsachse des Werkzeugs des Arbeitskopfes 9, sodass ein Kippen des Fahrwagens verhindert wird.

## Patentansprüche

1. Eikanalfahrwagen für Kanalsanierungsroboter mit einer Antriebseinheit (1) und zumindest einem angetriebenen Rad (2), wobei zwischen der Antriebseinheit (1) und dem Rad (2) eine aus mehreren, lösbar miteinander verbundenen Modulen (3) bestehende Stützstrebe (4) angeordnet ist, **dadurch gekennzeichnet, dass** jedes Modul (3) eine Antriebskraftübertragungseinrichtung mit zumindest einem Zahnrad (5) umfasst, welches mit einem Zahnrad (5) eines benachbarten Moduls in Eingriff bringbar ist.

2. Eikanalfahrwagen nach Anspruch 1, **dadurch gekennzeichnet, dass** ein vorderes Radpaar (2) und ein hinteres Radpaar (2) vorgesehen sind, welchen jeweils eine Stützstrebe (4) zugeordnet ist.

3. Eikanalfahrwagen nach einem der Ansprüche 1 oder 2, **dadurch gekennzeichnet, dass** die Antriebseinheit (1) beidseitig jeweils zumindest eine Stützeinheit (6) aufweist.

4. Eikanalfahrwagen nach Anspruch 3, **dadurch gekennzeichnet, dass** die Stützeinheit (6) Rollen (7) umfasst.

5. Eikanalfahrwagen nach einem der Ansprüche 3 oder 4, **dadurch gekennzeichnet, dass** die Stützeinheit (6) schwenkbar gelagert ist.

6. Eikanalfahrwagen nach einem der Ansprüche 3 bis 5, **dadurch gekennzeichnet, dass** die Stützeinheit (6) federnd gelagert ist.

7. Eikanalfahrwagen nach einem der Ansprüche 1 bis 6, **dadurch gekennzeichnet, dass** die Antriebseinheit (1) eine Aufnahmeeinrichtung für einen Rohrroboter (8) umfasst.

## Claims

1. Oval channel vehicle for channel sanitation robots with a drive unit (1) and at least one driven wheel (2), wherein between the drive unit (1) and the wheel (2) a supporting brace (4) consisting of several modules (3) detachably connected to one another is arranged, **characterised in that** each module (3) comprises a drive power transmission device with at least one toothed wheel (5) which can be brought into engagement with a toothed wheel (5) of an adjacent module.

2. Oval channel vehicle according to claim 1, **characterised in that** a front pair of wheels (2) and a rear pair of wheels (2) are provided, to which a supporting brace (4) is assigned in each case.

3. Oval channel vehicle according to one of claims 1 or 2, **characterised in that** the drive unit (1) has at least one supporting unit (6) on both sides in each case.

4. Oval channel vehicle according to claim 3, **characterised in that** the supporting unit (6) comprises rollers (7).

5. Oval channel vehicle according to one of claims 3 or 4, **characterised in that** the supporting unit (6) is held as swivellable.

6. Oval channel vehicle according to one of claims 3 to 5, **characterised in that** the supporting unit (6) is held as sprung.

7. Oval channel vehicle according to one of claims 1 to 6, **characterised in that** the drive unit (1) comprises a retainer device for a tubular robot (8).

## Revendications

1. Véhicule pour canal ovoïde destiné à un robot d'assainissement de canaux, comprenant une unité d'entraînement (1) et au moins une roue entraînée (2), une traverse d'appui (4) constituée de plusieurs modules (3) reliés entre eux de façon détachable étant prévue entre l'unité d'entraînement (1) et la roue (2), **caractérisé en ce que** chaque module (3) comprend un dispositif de transmission de la force motrice équipé d'au moins une roue dentée (5) qui peut venir engrener avec une roue dentée (5) d'un module voisin.

2. Véhicule pour canal ovoïde selon la revendication 1, **caractérisé en ce que** sont prévues une paire de roues avant (2) et une paire de roues arrière (2), auxquelles est associée respectivement une traverse de soutien (4).

3. Véhicule pour canal ovoïde selon l'une des revendications 1 ou 2, **caractérisé en ce que** l'unité d'entraînement (1) présente, de part et d'autre, au moins une unité de soutien (6).

4. Véhicule pour canal ovoïde selon la revendication 3, **caractérisé en ce que** l'unité de soutien (6) comprend des rouleaux (7).

5. Véhicule pour canal ovoïde selon l'une des revendications 3 ou 4, **caractérisé en ce que** l'unité de soutien (6) est montée pivotante.

6. Véhicule pour canal ovoïde selon l'une des revendications 3 à 5, **caractérisé en ce que** l'unité de soutien (6) est montée de façon élastique.

7. Véhicule pour canal ovoïde selon l'une des revendications 1 à 6, **caractérisé en ce que** l'unité d'entraînement (1) comprend un dispositif formant logement, destiné à un robot pour tuyaux (8).
